# FASCICULE DE BREVET EUROPEEN

(11) **EP 2 743 786 B1**
(45) Date de publication et mention de la délivrance du brevet: **31.10.2018**
(21) Numéro de dépôt: 13183157.0
(22) Date de dépôt: 05.09.2013
(51) Int. Cl.: G04G 17/04, G04G 17/08

(54) **Dispositif électronique portable et procédé de fabrication d'un tel dispositif**
Tragbare elektronische Vorrichtung und Herstellungsverfahren einer solchen Vorrichtung
Portable electronic device and method for manufacturing such a device

(30) Priorité: 17.12.2012 EP 12197484
(43) Date de publication de la demande: 18.06.2014
(73) Titulaire: The Swatch Group Research and Development Ltd., 2074 Marin (CH)
(72) Inventeur: Heck, Pascal, 3235 Erlach (CH); Nicolas, Cédric, 2000 Neuchâtel (CH)
(74) Mandataire: Giraud, Eric

(56) Documents cités:
- EP-A1- 2 484 243
- WO-A1-01/88636
- WO-A1-02/32665
- US-A- 5 931 764

## Description

La présente invention concerne un dispositif électronique portable flexible ainsi qu'un procédé de fabrication d'un tel dispositif. La présente invention concerne en particulier un dispositif électronique portable flexible du type montre-bracelet et son procédé de fabrication.

Un dispositif électronique portable flexible tel que celui décrit dans la demande de brevet européen EP 1 158 375 A1 au nom de la demanderesse comprend essentiellement un corps souple agencé pour pouvoir être fixé à une partie du corps d'un utilisateur comme un poignet. En un endroit de la longueur du corps souple est ménagée une cavité dans laquelle sont logés un ensemble électronique pour élaborer une information, un dispositif numérique d'affichage d'informations pour afficher l'information élaborée par l'ensemble électronique, et une source d'énergie électrique pour alimenter l'ensemble électronique.

La fabrication d'un tel dispositif électronique portable nécessite le surmoulage de la cavité au moyen d'un polymère qui se caractérise par une souplesse et une élasticité élevées. Parmi les polymères adaptés à une telle application, on peut citer certains élastomères tels que le caoutchouc naturel, le copolymère styrène-butadiène ou bien encore le polyuréthane thermoplastique. D'autres matériaux du type polymère thermoplastique souple tels qu'un polyamide ou un silicone sont également envisageables. Cette opération de surmoulage qui a pour but de conférer au dispositif électronique portable sa forme et son épaisseur finales présente cependant deux inconvénients notables. En premier lieu, certains matériaux tels que les élastomères ne présentent pas une étanchéité suffisante pour protéger les composants électroniques du dispositif électronique portable contre l'humidité ou contre certains gaz. En effet, au cours de la vie du dispositif électronique portable, la vapeur d'eau et les gaz diffusent lentement à travers l'élastomère et peuvent atteindre les composants électroniques, ce qui nuit au fonctionnement de ces composants électroniques et peut même conduire à leur destruction. Le second inconvénient de l'opération de surmoulage réside dans les hautes températures mises en jeu par certains élastomères ou matériaux plastiques lors de leur surmoulage. De telles hautes températures ne sont pas compatibles avec les composants électroniques et endommageraient ces composants électroniques de manière irréversible. Pour l'opération de surmoulage du dispositif électronique portable flexible, on est donc limité dans le choix des matériaux utilisables par les températures de mise en oeuvre de ces matériaux.

La demande internationale WO 01/88636 divulgue un dispositif électronique portable dont le corps est constitué d'une couche de matériau plastique. Le corps reçoit sur un côté intérieur un ensemble électronique. Le dispositif électronique portable comprend également un premier film plastique qui recouvre le corps du côté opposé à celui sur lequel est agencé l'ensemble électronique, et un second film plastique qui recouvre l'ensemble électronique.

La demande internationale WO 02/32665 divulgue un dispositif électronique comportant :
- un ensemble électronique monté sur un circuit flexible ;
- un corps de base constitué d'une couche de matériau plastique qui comprend un côté extérieur et un côté intérieur sur lequel le corps de base reçoit le circuit flexible ;
- un premier film étanche qui recouvre l'ensemble électronique, et
- un second film étanche qui recouvre le corps de base du côté extérieur.

La présente invention a pour but de pallier ces inconvénients en procurant un dispositif électronique portable flexible qui soit étanche et qui permette, le cas échéant, d'utiliser des techniques de surmoulage à hautes températures.

A cet effet, la présente invention concerne un dispositif électronique tel que défini dans la revendication indépendante 1.

Grâce à ces caractéristiques, la présente invention procure un dispositif électronique portable dont le corps, formé d'une couche de matériau plastique, est revêtu d'un premier film plastique imperméable. On n'est donc plus limité dans le choix du matériau à l'aide duquel le corps du dispositif électronique portable est réalisé. En effet, le premier film plastique dont le corps du dispositif électronique portable est revêtu forme une barrière totalement étanche à l'humidité. Par conséquent, même si le corps du dispositif électronique portable est réalisé dans un matériau à travers lequel l'humidité et les gaz peuvent diffuser, les composants de l'ensemble électronique d'élaboration de l'information, disposés à l'intérieur d'une poche délimitée par le second film plastique étanche qui est solidarisé sur le premier film plastique étanche, sont parfaitement à l'abri de l'humidité.

Selon une caractéristique complémentaire de l'invention, le corps du dispositif électronique portable est constitué d'une couche de matériau plastique souple. Avantageusement, le corps du dispositif électronique portable est réalisé en élastomère.

Selon encore une autre caractéristique de l'invention, le dispositif électronique portable comprend en outre au moins un dispositif numérique d'affichage d'informations pour afficher l'information, et une source d'alimentation électrique pour alimenter l'ensemble électronique d'élaboration de l'information.

La présente invention concerne également un procédé de fabrication d'un tel dispositif électronique portable, ce procédé étant défini dans la revendication indépendante 6.

Grâce à ces caractéristiques, la présente invention procure un procédé de fabrication d'un dispositif électronique portable dans lequel un film plastique étanche est surmoulé avec un matériau plastique qui constitue le corps du dispositif électronique portable. Ce n'est qu'une fois cette étape du procédé de fabrication selon l'invention achevée que l'ensemble électronique d'élaboration de l'information peut être monté sur le film plastique étanche. Autrement dit, l'étape de montage de l'ensemble électronique d'élaboration de l'information ne se fait qu'après réalisation du corps du dispositif électronique portable. Il n'y a donc aucun risque que l'ensemble électronique d'élaboration de l'information soit exposé à des conditions de fabrication susceptibles de l'endommager, voire de le détruire. Par ailleurs, le procédé de fabrication selon l'invention offre une totale liberté quant au choix du matériau plastique utilisé pour réaliser le corps du dispositif électronique portable. En particulier, on n'est nullement limité en ce qui concerne la température à laquelle s'effectue l'opération de surmoulage.

Selon une caractéristique complémentaire du procédé de l'invention, avant l'étape de moulage du matériau plastique qui constitue le corps du dispositif électronique portable, on forme à chaud le premier film plastique imperméable pour donner au premier film plastique imperméable un profil recherché.

D'autres caractéristiques et avantages de la présente invention ressortiront plus clairement de la description détaillée qui suit d'un mode de réalisation du dispositif électronique portable flexible selon l'invention, cet exemple étant donné à titre purement illustratif et non limitatif seulement en liaison avec le dessin annexé sur lequel :
- la figure 1 est une vue de dessus du dispositif électronique portable selon l'invention ;
- la figure 2 est une vue en coupe longitudinale du dispositif électronique portable selon l'invention ;
- les figures 3A et 3B sont des vues schématiques qui illustrent le procédé de thermoformage du premier film plastique imperméable, et
- la figure 4 est une vue schématique qui illustre l'étape de surmoulage du premier film plastique imperméable des figures 3A et 3B.

La présente invention procède de l'idée générale inventive qui consiste à surmouler un film plastique imperméable avec un matériau plastique pour former le corps d'un dispositif électronique portable. Ce n'est qu'une fois l'opération de surmoulage menée à bien que l'on monte sur le film plastique étanche les composants électroniques nécessaires au fonctionnement du dispositif électronique portable. Par la suite, on solidarise un second film plastique imperméable sur le premier film plastique imperméable de façon à délimiter une enceinte parfaitement étanche dans laquelle les composants électroniques sont à l'abri de l'humidité. Grâce à ces caractéristiques, on dispose d'une totale liberté quant au choix du matériau plastique dans lequel on réalise le corps du dispositif électronique portable. Il peut s'agir, par exemple, d'un matériau élastomère dont on sait pourtant que l'humidité et les gaz peuvent diffuser à travers. Cependant, étant donné que le corps en élastomère est revêtu sur sa face qui porte les composants électroniques d'un film plastique étanche, les composants électroniques sont parfaitement protégés, le film plastique étanche faisant obstacle à la progression de l'humidité et des gaz. On n'a pas non plus à se soucier de la température de mise en oeuvre du matériau dans lequel est réalisé le corps du dispositif électronique portable. En effet, l'étape de surmoulage du corps survient avant l'étape de montage des composants. Par conséquent, les étapes de fabrication qui, le cas échéant, mettent en jeu des températures élevées sont achevées lors du montage des composants électroniques, de sorte que ces composants ne risquent pas d'être endommagés ou détruits par la chaleur.

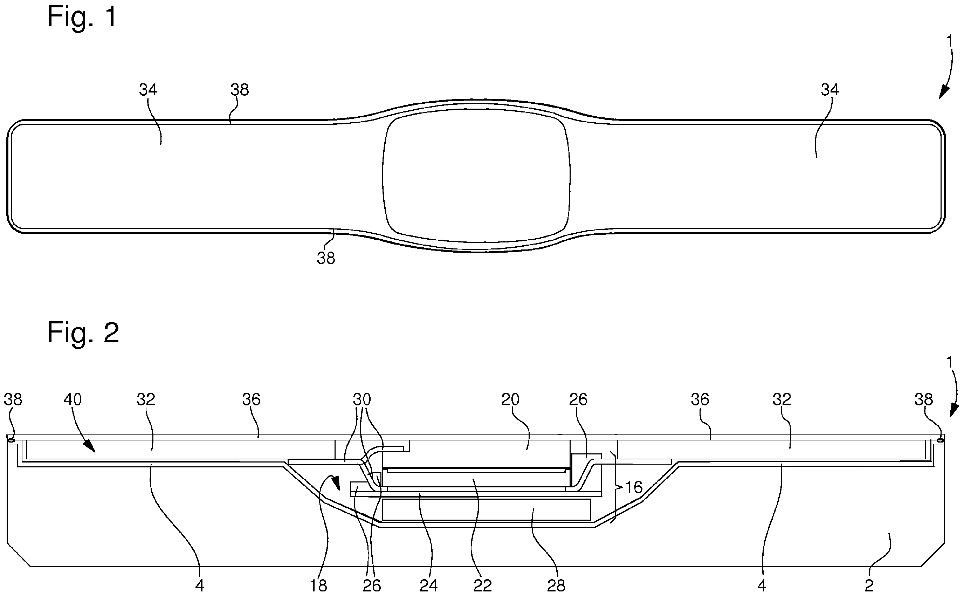

La figure 1 est une vue de dessus du dispositif électronique portable selon l'invention et la figure 2 est une vue en coupe longitudinale du dispositif électronique portable de la figure 1. Désigné dans son ensemble par la référence numérique générale 1, le dispositif électronique portable selon l'invention comprend un corps 2 constitué d'une couche de matériau plastique qui confère au dispositif électronique portable 1 une forme et une épaisseur. Le corps 2 peut être réalisé en tout matériau plastique tel que, non limitativement, en élastomère.

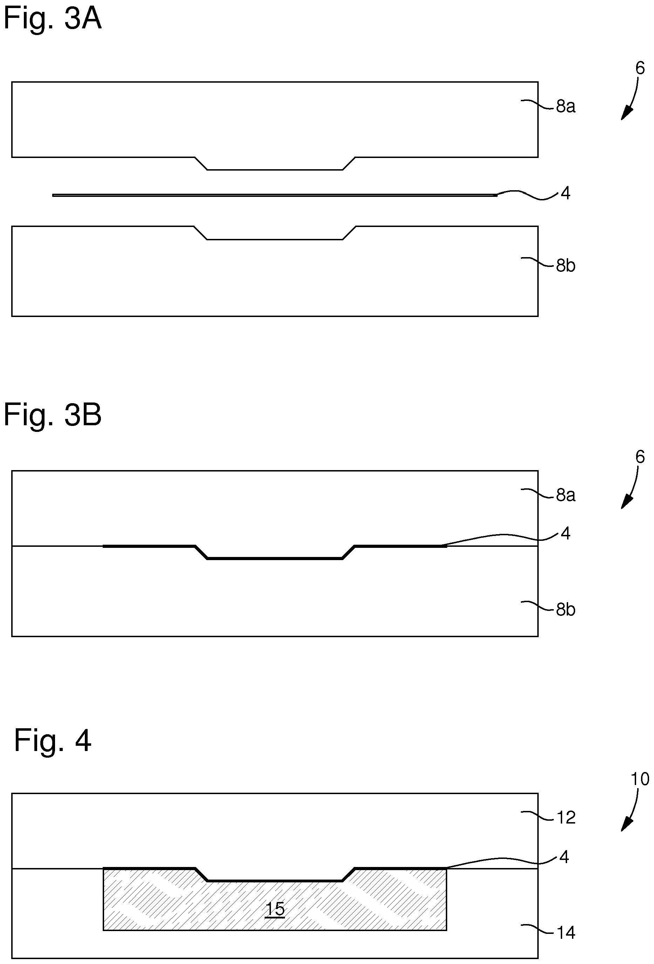

Conformément à l'invention, un premier film plastique étanche 4 sert de revêtement à la couche de matériau plastique qui constitue le corps 2 du dispositif électronique portable 1. Pour atteindre ce résultat, on commence (voir figures 3A et 3B) par former à chaud le premier film plastique étanche 4 afin de lui donner la forme recherchée. Cette technique consiste à presser à chaud le premier film plastique étanche 4 dans un premier moule 6 comprenant deux empreintes 8a et 8b qui présentent des formes complémentaires correspondant au profil que l'on veut donner au film plastique étanche 4. On notera que cette opération est facultative et ne dépend que de la finesse de la forme à répliquer. Le cas échéant, cette opération peut être réalisée en même temps que l'opération de moulage décrite ci-dessous.

Après formage à chaud et refroidissement consécutif, le premier film plastique étanche 4 est surmoulé avec une matière plastique souple, par exemple un élastomère, dans laquelle doit être réalisé le corps 2 du dispositif électronique portable 1. Cette technique est couramment désignée par sa dénomination anglo-saxonne Film Insert Moulding. A cet effet (voir figure 4), le premier film plastique étanche 4 est placé dans un second moule 10 dont une partie supérieure 12 contre laquelle le premier film plastique étanche 4 est plaqué présente un profil qui épouse celui du premier film plastique étanche 4, et dont une partie inférieure 14 présente des épargnes 15 aux endroits où l'on veut injecter la matière plastique dans laquelle doit être réalisé le corps 2 du dispositif électronique portable 1.

A l'issue des étapes de fabrication décrites ci-dessus, on obtient un corps 2 en matière plastique qui présente sensiblement la forme d'une bande ou d'un bracelet. Ce corps 2 en matière plastique est revêtu du côté où doit être monté un ensemble électronique 16 d'élaboration d'une information d'un premier film plastique étanche 4. A cet effet, le corps 2 du dispositif électronique portable 1 présente, en un endroit de sa longueur, une cavité 18 dans laquelle est logé l'ensemble électronique 16 pour élaborer une information. Dans l'exemple représenté au dessin, le dispositif électronique portable 1 est prévu pour élaborer en particulier une information horaire. A cet effet, l'ensemble électronique 16 comprend un dispositif d'affichage 20 tel qu'une cellule à cristal liquide sous laquelle est disposé un guide de lumière 22 prévu pour éclairer le dispositif d'affichage 20 par l'arrière. Le montage est complété par une plaquette de circuit imprimé 24 sur laquelle sont montés les divers composants électroniques intégrés et discrets 26 nécessaires au bon fonctionnement du dispositif électronique portable 1 tels que, notamment, une base de temps. La plaquette de circuit imprimé 24 est reliée au dispositif d'affichage 20, au guide de lumière 22 ainsi qu'à un accumulateur rechargeable 28 au moyen d'une pluralité de connecteurs 30. L'accumulateur rechargeable 28 est alimenté par au moins une et, préférentiellement, deux cellules solaires 32 qui sont avantageusement logées dans les brins 34 du bracelet.

La fabrication du dispositif électronique portable 1 selon l'invention s'achève lorsqu'on solidarise un second film plastique étanche 36 sur une périphérie 38 du premier film plastique étanche 4. La solidarisation peut être effectuée par collage ou thermo-soudage. Les deux premier et second films plastiques étanches 4 et 36 délimitent ainsi entre eux une cavité 40 parfaitement étanche à l'intérieur de laquelle est logé l'ensemble électronique 16 d'élaboration de l'information. A titre de variante, il est également possible de solidariser le second film plastique étanche 36 sur toute la surface du premier film plastique étanche 4.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées à la présente demande de brevet. En particulier, grâce aux caractéristiques de la présente invention, on obtient un dispositif électronique portable 1 dans lequel les composants électroniques qui forment l'ensemble électronique 16 d'élaboration de l'information sont montés sur le corps 2 du dispositif électronique portable 1 avec interposition d'un premier film plastique étanche 4 entre les composants électroniques et le corps 2. Par conséquent, même si le matériau sélectionné pour réaliser le corps 2 du dispositif électronique portable 1, par exemple un élastomère, laisse diffuser l'humidité, les composants électroniques sont parfaitement protégés grâce à la présence du premier film plastique étanche 4 qui joue le rôle de barrière contre l'humidité. Par ailleurs, comme l'étape de fabrication du corps 2 du dispositif électronique portable 1 intervient avant le montage des composants électroniques, on n'est nullement limité par les températures auxquelles il faut porter les matières plastiques pour pouvoir réaliser le corps 2. Dans ce cas aussi, on jouit d'une totale liberté quant au choix des matériaux plastiques.

## Revendications

1. Dispositif électronique portable capable d'élaborer une information, ce dispositif électronique portable (1) comprenant :
• un corps (2) agencé pour pouvoir être fixé à un utilisateur, le corps (2) du dispositif électronique portable (1) étant constitué d'une couche de matériau plastique qui confère au dispositif électronique portable (1) une forme et une épaisseur,
• au moins un ensemble électronique (16) pour élaborer l'information,
• un premier film plastique étanche (4), et
• un second film pastique étanche (36),
le premier film plastique étanche (4) revêtant le corps (2) du côté où est monté l'ensemble électronique (16) pour élaborer l'information, et le second film plastique étanche (36) étant solidarisé, du même côté, sur le premier film plastique étanche (4), de façon à délimiter entre les premier et second films plastiques étanches (4, 36) une cavité étanche (40) dans laquelle l'ensemble électronique (16) pour élaborer l'information est logé.

2. Dispositif électronique portable selon la revendication 1, **caractérisé en ce que** le corps (2) du dispositif électronique portable (1) est constitué d'une couche de matériau plastique souple.

3. Dispositif électronique portable selon la revendication 2, **caractérisé en ce que** le corps (2) du dispositif électronique portable (1) est réalisé en un polymère souple et élastique.

4. Dispositif électronique portable selon l'une quelconque des revendications 1 à 3, **caractérisé en ce que** le dispositif électronique portable (1) comprend en outre au moins un dispositif numérique d'affichage d'informations (20) pour afficher l'information, et une source d'alimentation électrique pour alimenter l'ensemble électronique d'élaboration de l'information.

5. Dispositif électronique portable selon la revendication 4, **caractérisé en ce que** la source d'alimentation électrique comprend un accumulateur rechargeable (28) alimenté par au moins une cellule solaire (32).

6. Procédé de fabrication d'un dispositif électronique portable (1) selon l'une des revendications 1 à 5, le procédé comprenant les étapes de :
- surmouler sur une face extérieure d'un premier film plastique étanche (4) une couche de matériau plastique qui constitue le corps (2) du dispositif électronique portable (1) ;
- monter l'ensemble électronique (16) d'élaboration de l'information du côté d'une face intérieure du premier film plastique étanche (4), et
- solidariser un second film plastique étanche (36) sur le premier film plastique étanche (4), de façon à délimiter entre les premier et second films plastiques étanches (4, 36) une cavité étanche (40) dans laquelle est logé l'ensemble électronique (16) d'élaboration de l'information.

7. Procédé de fabrication d'un dispositif électronique portable selon la revendication 6, **caractérisé en ce qu'**il comprend l'étape qui consiste, avant l'étape de moulage du matériau plastique qui constitue le corps du dispositif électronique portable, à former à chaud le premier film plastique étanche (4) pour donner au premier film plastique étanche (4) un profil recherché.

## Patentansprüche

1. Tragbare elektronische Vorrichtung, geeignet, eine Information zu erstellen, wobei diese tragbare elektronische Vorrichtung (1) umfasst:
• einen Körper (2), angeordnet, um an einem Benutzer befestigbar zu sein, wobei der Körper (2) der tragbaren elektronischen Vorrichtung (1) aus einer Kunststofflage gebildet ist, die der tragbaren elektronischen Vorrichtung (1) eine Form und eine Dicke verleiht,
• mindestens eine elektronische Baugruppe (16) zum Erstellen der Information,
• eine erste dichte Kunststofffolie (4) und
• eine zweite dichte Kunststofffolie (36),
wobei die erste dichte Kunststofffolie (4) den Körper (2) auf jener Seite bedeckt, auf der die elektronische Baugruppe (16) zum Erstellen der Information montiert ist, und wobei die zweite dichte Kunststofffolie (36) auf derselben Seite auf der ersten dichten Kunststofffolie (4) befestigt ist, derart, dass zwischen der ersten und der zweiten dichten Kunststofffolie (4, 36) ein dichter Hohlraum (40) begrenzt wird, in dem die elektronische Baugruppe (16) zum Erstellen der Information eingebracht ist.

2. Tragbare elektronische Vorrichtung nach Anspruch 1, **dadurch gekennzeichnet, dass** der Körper (2) der tragbaren elektronischen Vorrichtung (1) aus einer flexiblen Kunststofflage gebildet ist.

3. Tragbare elektronische Vorrichtung nach Anspruch 2, **dadurch gekennzeichnet, dass** der Körper (2) der tragbaren elektronischen Vorrichtung (1) aus einem flexiblen und elastischen Polymer hergestellt ist.

4. Tragbare elektronische Vorrichtung nach einem der Ansprüche 1 bis 3, **dadurch gekennzeichnet, dass** die tragbare elektronische Vorrichtung (1) ferner mindestens eine digitale Informationsanzeigevorrichtung (20) zum Anzeigen der Information und eine Stromversorgungsquelle zum Versorgen der elektronischen Baugruppe zum Erstellen der Information umfasst.

5. Tragbare elektronische Vorrichtung nach Anspruch 4, **dadurch gekennzeichnet, dass** die Stromversorgungsquelle einen wiederaufladbaren Akkumulator (28) aufweist, der durch mindestens eine Solarzelle (32) versorgt wird.

6. Verfahren zum Herstellen einer tragbaren elektronischen Vorrichtung (1) nach einem der Ansprüche 1 bis 5, wobei das Verfahren die folgenden Schritte umfasst:
• Anformen einer Kunststofflage, die den Körper (2) der tragbaren elektronischen Vorrichtung (1) bildet, auf einer äußeren Fläche einer ersten dichten Kunststofffolie (4);
• Montieren der elektronischen Baugruppe (16) zum Erstellen der Information auf Seiten einer inneren Fläche der ersten dichten Kunststofffolie (4) und
• Befestigen einer zweiten dichten Kunststofffolie (36) auf der ersten dichten Kunststofffolie (4), derart, dass zwischen der ersten und der zweiten dichten Kunststofffolie (4, 36) ein dichter Hohlraum (40) begrenzt wird, in dem die elektronische Baugruppe (16) zum Erstellen der Information eingebracht ist.

7. Verfahren zum Herstellen einer tragbaren elektronischen Vorrichtung nach Anspruch 6, **dadurch gekennzeichnet, dass** dieses einen Schritt umfasst, der darin besteht, vor dem Schritt des Anformens des Kunststoffs, der den Körper der tragbaren elektronischen Vorrichtung bildet, die erste dichte Kunststofffolie (4) heißzuformen, um der ersten dichten Kunststofffolie (4) ein Anforderungsprofil zu verleihen.

## Claims

1. Portable electronic device capable of processing information, said portable electronic device (1) including:
• a body (2) arranged to be capable of being secured to a user, the body (2) of the portable electronic device (1) being formed by a layer of plastic material which gives the portable electronic device a shape and thickness,
• at least one electronic assembly (16) for processing information,
• a first impermeable plastic film (4), and
• a second impermeable plastic film (36),
wherein the first impermeable plastic film (4) coats the body (2) on the side where the electronic assembly (16) for processing information is mounted, and the second impermeable plastic film (36) is secured, on the same side, to the first impermeable plastic film (4), so as to delimit, between the first and second impermeable plastic films (4, 36), an impermeable pouch (40) inside which the electronic assembly (16) for processing information is housed.

2. Portable electronic device according to claim 1, **characterized in that** the body (2) of the portable electronic device (1) is formed of a layer of flexible plastic material.

3. Portable electronic device according to claim 2, **characterized in that** the body (2) of the portable electronic device (1) is made of a flexible resilient polymer.

4. Portable electronic device according to any of claims 1 to 3, **characterized in that** the portable electronic device (1) further includes at least one digital information display device (20) for displaying information, and an electrical power source for powering the electronic assembly for processing information.

5. Portable electronic device according to claim 4, **characterized in that** the electrical power source includes a rechargeable accumulator (28) powered by at least one solar cell (32).

6. Method of manufacturing a portable electronic device (1) according to nay of claims 1 to 5, wherein the method includes the steps of:
- overmoulding a layer of plastic material which forms the body (2) of the portable electronic device (1), on an external face of a first impermeable plastic film (4);
- mounting the electronic assembly (16) for processing information on the inner face side of the first impermeable plastic film (4), and
- securing a second impermeable plastic film (36) to the first impermeable plastic film (4), so as to delimit, between the first and second impermeable plastic films (4, 36), an impermeable pouch (40) which houses the electronic assembly (16) for processing information.

7. Method of manufacturing a portable electronic device according to claim 6, **characterized in that** it includes the step which consists, prior to the step of moulding the plastic material which forms the body of the portable electronic device, in thermoforming the first impermeable plastic film (4) to give the first impermeable plastic film (4) the desired contour.
